# EUROPEAN PATENT APPLICATION

(11) **EP 0 973 056 A1**
(43) Date of publication of application: **19.01.2000**
(21) Application number: 99830384.6
(22) Date of filing: 21.06.1999
(51) Int. Cl.: G02C 5/22

(54) **Spectacle frames with hinge formed of metal wire and spectacles comprising said frames**

(30) Priority: 15.07.1998 IT FI980169
(71) Applicant: BOTTEGA D'ARTE IN FIRENZE S.R.L., 50136 Firenze (IT)
(72) Inventor: Fortini, Fabio, 50141 Firenze (IT)
(74) Representative: Mannucci, Michele

(57) **Abstract**

The frames comprise a front portion (9A, 9B, 13) in which lenses (L) are mounted, two arms (1, 3) and two hinges (5, 7) via which the arms (1, 3) are hinged. The hinges are formed by the metal wires that form the arm and the front portion of the frames respectively; a first metal wire forms a hinge seat defined by a series of helical turns (1A), and a second metal wire (9) forms a hinge pin (9E) and a U-shaped loop (9D) defining an abutment surface which limits the maximum extent to which the arm (1, 3) can open. The first metal wire - which forms the helical turns (1A) - is encircled, in the vicinity of the helical turns, by the U-shaped loop (9D) formed by the second wire.

## Description

### Technical Field

The present invention relates to spectacle frames and in particular to frames made at least partly of metal wire.

The present invention also relates to spectacles made using said frames.

### Prior Art

Frames made wholly or partly of metal wire are known. WO-A-97/43683 discloses frames made of metal wire in which the hinges connecting the front portion to the arms are made from the metal wire forming the front portion and the arms respectively. More specifically, one of the frames described in WO-A-97/43683 has a front portion in which lenses are mounted, two arms and two hinges via which the arms are hinged to the front portion of the frames. The hinges are formed by the metal wires that form the arm and the front portion of the frames respectively: a first metal wire forms a hinge seat defined by a series of helical turns; a second metal wire forms a hinge pin, means for axially retaining the hinge pin in the seat, and a U-shaped loop defining an abutment surface which limits the maximum extent to which the arm can open. The pin constitutes an extension of one of the branches of said U-shaped loop.

This particular type of hinge permits easy assembly without the need for special tools, it eliminates the use of screws or other extra elements which make assembly more complex, and allows the arms to be easily removed from and re-attached to the front portion of the frames.

### Objects and Summary of the Invention

The present invention relates to an improvement to the frames described in WO-A-97/43683.

More specifically, the object of the present invention is to produce frames of the type mentioned above, which are smaller and therefore more esthetically pleasing and which enable even greater stability to be achieved in the coupling between the arm and the front portion of the frames.

Basically, according to the invention, the first metal wire - which forms the helical turns defining the seat for the hinge pin - is encircled, in the vicinity of the helical turns, by the U-shaped loop formed by the second metal wire. An effective connection is thus produced between the arm and the front portion of the frames, with a hinge of limited dimensions.

The helical turns can be formed in the wire forming the front portion of the frames and the pin in the arm wire, but the opposite arrangement is preferred: i.e. with the wire forming the front portion of the frames forming the hinge pin and the U-shaped loop and the arm wire forming the helical turns which define the seat into which the pin is inserted.

The hinge pin is inserted and secured in the seat by rotating the arm and the front portion of the frames with respect to each other.

According to a particularly advantageous embodiment of the invention, the second wire forms a bend which partly (for example over an angle greater than 90°) encircles the helical turns defining said seat, said bend constituting the extension of a second branch of said U-shaped loop. The second wire screws over the grooves defined by the turns formed by the first wire during rotation of the arm. When the abovementioned bend is present, it engages in the helical channel formed by the turns.

Advantageously, the end of the portion of wire that forms the helical turns defines an abutment surface which engages with the second wire so as further to secure the position of the arm with respect to the front portion of the frames, even when the arm is in the closed position.

Further advantageous features of the invention are indicated in the appended claims.

### Brief Description of the Drawings

A better understanding of the invention will be gained by following the description and the attached drawing, the latter showing a practical and non-limiting example of said invention. In the drawing:
Fig. 1 shows a front view of an embodiment of the frames according to the invention, with their corresponding lenses;
Fig. 2 shows a perspective view from below of one of the hinges of the frames, with the arm in the closed position;
Fig. 3 shows a plan view from below on III-III in Fig. 2;
Fig. 4 shows a view similar to the view in Fig. 2, with the arm in the open position;
Fig. 5 shows a plan view from below on IV-IV in Fig. 4;
Fig. 6 shows a perspective view of the preliminary stage of assembling the arm;
Fig. 7 shows a side view on VII-VII in Fig. 6;
Fig. 8 shows a plan view from below on VIII-VIII in Fig. 6;
Fig. 9 shows a perspective view similar to that of Fig. 6, with the arm in the assembled position;
Fig. 10 shows a side view on X-X in Fig. 9;
Fig. 11 shows a plan view from below on Xl-XI in Fig. 9; and
Fig. 12 shows a side view of the assembled hinge.

### Detailed Description of the Preferred Embodiment of the Invention

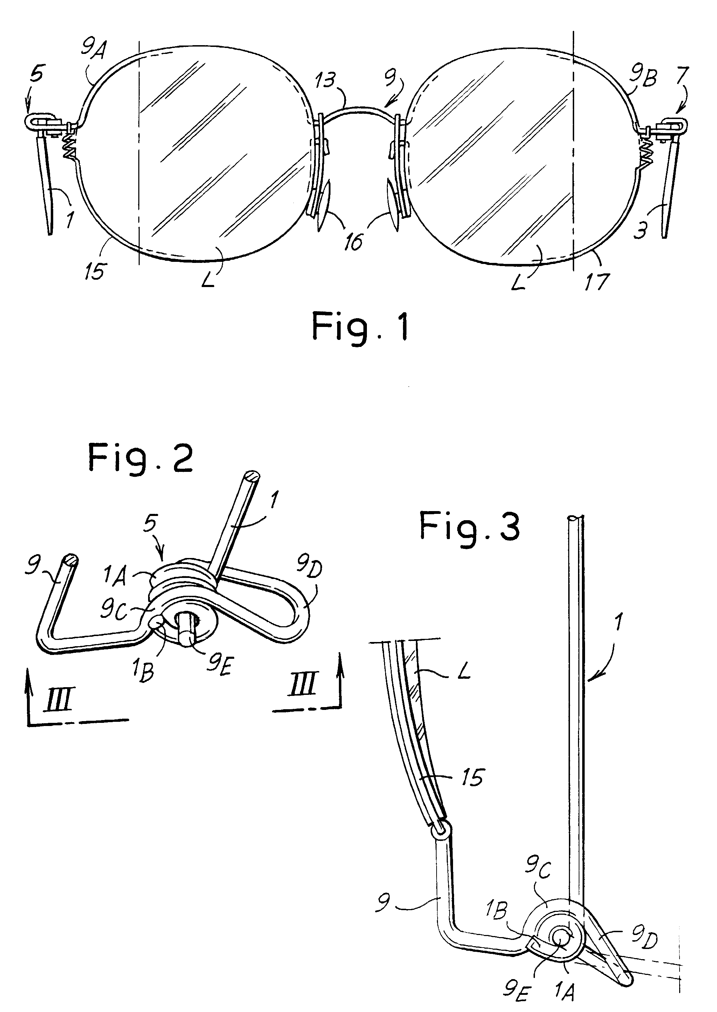

Fig. 1 schematically shows a front view of a pair of spectacles fitted with frames according to the invention. The reference L denotes the two lenses, while 1 and 3 denote two arms which, via hinges 5 and 7, are hinged to the front portion 9 of the frames. The latter is formed, in the example shown in the drawing, by a metal wire which forms two half-rims 9A and 9B around the upper edges of the lenses L and a small intermediate bridge 13. Attached to the bridge 13 are two brackets fitted with small plates or pads 16 via which the frames rest on the wearer's nose. The lower edges of the lenses L are surrounded by two metal wires, advantageously of smaller diameter, denoted 15 and 17 and forming two helical springs at the outer corners of the frames, where the bottom wire joins the top wire 9.

As will be clear from the following description the front portion of the frames, in which the lenses are mounted, may be of any other shape. For example, rimless frames can also be provided, in which two lengths of wire are fastened directly in holes formed in the lenses, close to the edge of the latter, and form a first part of the hinges 5, 7.

The arms 1, 3 are formed, at least partly, of metal wire. The front portion of the frames can also be made in a different way to that described thus far, the only crucial point as far as the purposes of the present invention are concerned being that said front portion has two lengths of metal wire at the point where the hinges 5 and 7 are located.

The invention relates specifically to the shape of the hinges 5 and 7, which are identical. A detailed description will now be given of the hinge 7, with reference to Figs. 2-11.

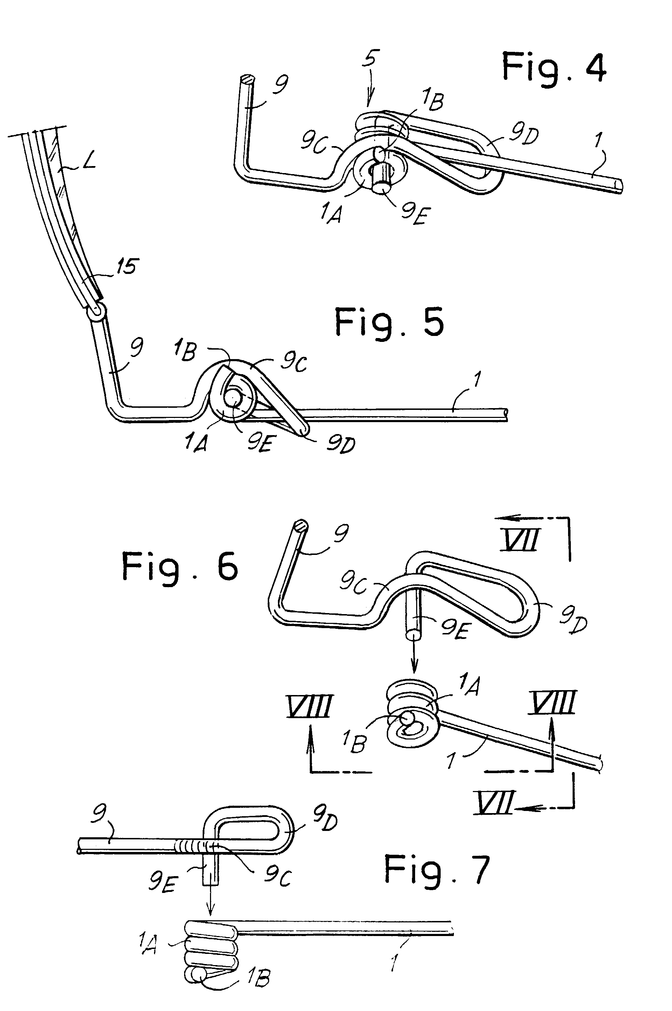

Figs. 2 and 4 show a perspective view from below of the frames, limited to the hinge area 5. The synthetic bottom wire 15 has been omitted for greater clarity.

Around the hinge 5 the metal wire 9 forms a bend 9C of approximately 100-160° and a U-shaped loop 9D which constitutes an abutment surface defining the position of maximum opening of the arm 1 with respect to the front portion of the frames. The upper branch of the U-shaped loop 9D is bent at 90° and forms a pin 9E for the hinge 5 which is inserted axially into a series of helical turns 1A formed by the wire constituting the arm 1 of the frames. The reference 1 B denotes the terminal end of the wire 1.

The elements forming the hinge 5 are shown in isolation and in the assembly stages in Figs. 6 to 11. More specifically, in Figs. 6 to 8 the pin 9E formed by the wire 9 of the front portion of the frames is not engaged in the seat defined by the terminal helical turns 1A of the wire forming the arm 1. In order to effect assembly, the pin 9E is placed axially in line with the seat defined by the helical turns 1A of the wire 1 and then partially inserted into this seat.

The reciprocal angular position between the arm wire 1 and the wire 9 forming the front portion is shown in Figs. 6 and 7: the arm is positioned behind the frames, i.e. on the same side as the eye when the spectacles are being worn. Partial insertion of the pin 9E into the seat formed by the turns 1A gives a provisional coupling between the arm 1 and the wire 9 as a result of the slight degree of interference between the external surface of the turns 1A and the bend 9C in the wire 9, the distance between the bent portion 9C of the wire and the pin 9E being slightly less than the diameter of said wire.

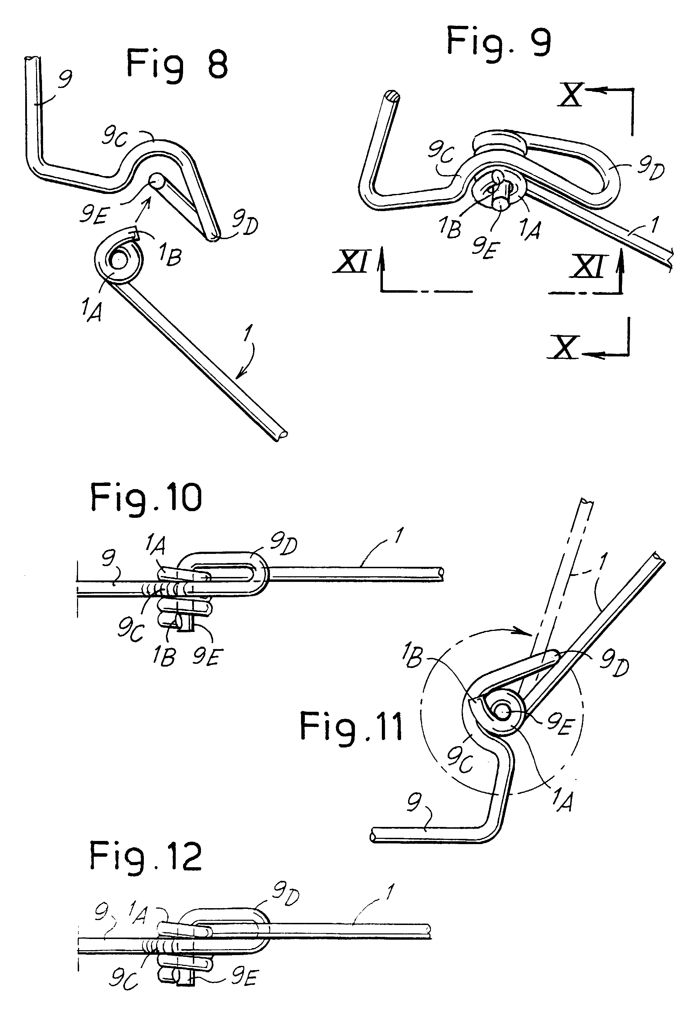

The arm 1 and the front portion 9 are at this point rotated with respect to one another through a suitable angle which, in the example illustrated, is slightly less than 360°, in the direction of the arrow in Figs. 9 and 11. As a result of this movement the bent region 9C of the wire is screwed onto the extemal surface of the tums 1A. In the final position (Fig. 6) the arm is in the open position and is positioned within the U-shaped loop 9D formed by the wire 9 (see also Fig. 12). The loop 9D thus defines an abutment surface for the position of maximum opening of the arm and at the same time prevents any movement between the arm 1 and the front portion of the frames along the axis of the hinge 5.

Once mounted, the arm can rotate through approximately 90° between a closed position (Figs. 2, 3) and an open position (Figs. 4, 5). During this movement the turns 1A and the portion of wire 9 forming the bend 9C screw together with a friction action. In the closed position the arm is prevented from pivoting about an axis perpendicular to the axis of the pin 9E by the force fit between the arm 1 and the lower branch of the U-shaped loop 9D on the one hand, and between the portion of wire forming the bend 9C and the end 1B of the wire forming the arm 1 on the other. When the arm is opened and the wire 9 screws into the turns 1A, the arm is forced against the upper branch of the U-shaped loop 9D. In both the closed and the open positions, therefore, the arm is correctly prevented from making any undesirable pivoting movements which might cause the arm to catch (in the closed position) or might adversely affect the position of the optical axis of the lenses with respect to the wearer (in the open position).

The configuration described above may be reversed, making the turns in the wire 9 forming the front portion of the frames and making the pin 9E, the loop 9D and the bend 9C in the wire forming the arm 1.

It should be understood that the drawing shows only one example, given solely as a practical demonstration of the invention, and that the forms and configurations of said invention may vary without thereby departing from the scope of the concept on which said invention is based. The presence of reference numerals in the appended claims has the sole purpose of facilitating reading thereof with reference to the description and the drawings, and does not limit the scope of protection.

## Claims

1. Spectacle frames comprising a front portion (9A, 9B, 13) in which lenses (L) can be mounted, two arms (1, 3) and two hinges (5, 7) via which the arms (1, 3) are hinged to the front portion of the frames, said hinges being formed by the metal wires that form the arm and the front portion of the frames respectively, a first metal wire forming a hinge seat defined by a series of helical turns (1A), and a second metal wire (9) forming a hinge pin (9E), means for axially retaining the hinge pin in the seat, and a U-shaped loop (9D) defining an abutment surface which limits the maximum extent to which the arm (1, 3) can open, said pin constituting an extension of one of the branches of said U-shaped loop (9D),
characterized in that the first metal wire - which forms the helical turns (1A) defining the seat for the hinge pin - is encircled, in the vicinity of the helical turns, by the U-shaped loop (9D).

2. Frames according to Claim 1, characterized in that the first metal wire forms part of the arm (1, 3) and the second metal wire (9) forms part of the front portion (9A, 9B, 13) of the frames.

3. Frames according to Claim 1 or 2, characterized in that said pin (9E) is inserted and secured in said seat (1A) by rotating the arm and the front portion of the frames with respect to each other.

4. Frames according to one or more of the preceding claims, characterized in that said second wire forms a bend (9C) which partly encircles the helical turns (1A) defining said seat, said bend constituting the extension of a second branch of said U-shaped loop (9D).

5. Frames according to Claim 4, characterized in that said bend extends over an angle greater than 90°.

6. Frames according to one or more of the preceding claims, characterized in that said wire (1) forming said helical turns (1A) terminates in an end (1 B) which forms an abutment surface which engages with said second metal wire (9).

7. Spectacles comprising frames according to one or more of the preceding claims.
